# DEMANDE DE BREVET EUROPEEN

(11) **EP 2 738 643 A1**
(43) Date de publication de la demande: **04.06.2014**
(21) Numéro de dépôt: 13195493.5
(22) Date de dépôt: 03.12.2013
(51) Int. Cl.: G06F 1/32, H04L 12/28

(54) **Procédé de contrôle de la consommation énergétique d'équipements d'un réseau de communication local**

(30) Priorité: 03.12.2012 FR 1261565
(71) Demandeur: Orange, 75015 Paris (FR)
(72) Inventeur: Han, Yan, 35510 Cesson Sevigne (FR); Mardon, Gil, 35310 Cintre (FR); Guegen, Cédric, 35510 Cesson Sevigne (FR)
(74) Mandataire: Regimbeau

(57) **Abrégé**

La présente invention concerne un procédé de contrôle de la consommation énergétique d'une pluralité d'équipements (1a, 1b, 1c, 1d, 1e) connectés au sein d'un réseau de communication local (10), le procédé comprenant la modification par un module de traitement de données (21) connecté au réseau (10) d'un état énergétique d'au moins un premier desdits équipements (1 a, 1b, 1 c, 1 d, 1e) ;
ledit procédé étant caractérisé en ce que ledit module de traitement de données (21) est en outre configuré pour :
- obtenir au moins un paramètre contextuel relatif à l'un des autres équipements (1 a, 1 b, 1 c, 1 d, 1 e) du réseau (10) ;
- Déterminer un usage prochain dudit premier équipement (1a, 1 b, 1 c, 1d, 1e) en fonction dudit au moins un paramètre obtenu, par interrogation d'une base de données relatives à des usages habituels desdits équipements (1 a, 1b, 1 c, 1 d, 1 e) stockée sur un module de stockage de données (22) connecté au réseau (10) ;
- Modifier l'état énergétique dudit premier équipement (1 a, 1 b, 1 c, 1 d, 1e) en fonction du résultat de la détermination d'usage prochain.

## Description

L'invention a pour objet l'optimisation énergétique, et concerne plus précisément un procédé de contrôle de la consommation énergétique d'une pluralité d'équipements d'un réseau de communication local.

### ETAT DE L'ART

Les réseaux de communication domestiques, c'est-à-dire les réseaux d'équipements connectés (entre eux et éventuellement à Internet) au sein d'un foyer, prennent aujourd'hui une place de plus en plus importante, et voient leur part dans la consommation électrique globale du foyer augmenter sensiblement. Ces équipements sont par exemple des ordinateurs, des boitiers d'accès à internet, des consoles de jeu, des télévisions, etc.

On constate que les utilisateurs ne prennent pas toujours l'initiative d'éteindre systématiquement les équipements de leur foyer après chaque utilisation, ce d'autant plus que les temps de redémarrage de tels équipements sont parfois particulièrement longs (parfois plusieurs minutes pour des boitiers multimédia, ou « Set-Top Box »).

Des solutions d'arrêt automatique d'équipements pour réduire la consommation ont ainsi été développées, mais on constate qu'elles affectent la Qualité d'Expérience Utilisateur (QoE).

Une première solution consiste à utiliser un module du réseau domestique (le coordinateur énergétique) qui détecte l'inactivité d'un équipement connecté, et commande son arrêt.

Cette solution permet de garder au maximum les équipements dans un état de consommation basse lorsqu'ils ne sont pas utilisés. Toutefois, on constate qu'il arrive souvent qu'un utilisateur utilise à nouveau un équipement peu de temps seulement après l'avoir laissé inactif. L'arrêt systématique de l'équipement représente dans ces cas une gêne notoire pour l'utilisateur qui est alors forcé d'attendre à chaque fois le redémarrage, parfois long, de l'équipement, avant nouvelle utilisation.

Une deuxième solution consiste à ajouter à chaque équipement une minuterie, amorcée quand l'équipement n'est plus utilisé. L'équipement n'est éteint que lorsque le compte à rebours de la minuterie arrive à zéro.

L'équipement reste ainsi actif pendant le décompte de temps, ce qui évite un redémarrage s'il est sollicité à nouveau dans cet intervalle de temps. Les économies d'énergies sont toutefois bien moindres à cause des périodes pendant lesquelles l'équipement reste allumé pour rien. Par ailleurs, l'équipement peut toujours s'éteindre à un moment inopportun, d'où un problème non résolu de baisse de la QoE.

On voit donc que les solutions connues de gestion de la consommation énergétique se font au détriment de la qualité d'expérience utilisateur.

Il serait par conséquent souhaitable de disposer d'une solution permettant de réduire encore davantage la consommation énergétique sans dégrader le confort d'utilisation (la QoE), voire même en l'améliorant.

### PRESENTATION DE L'INVENTION

La présente invention se rapporte ainsi selon un premier aspect à un procédé de contrôle de la consommation énergétique d'une pluralité d'équipements connectés au sein d'un réseau de communication local, le procédé comprenant la modification par un module de traitement de données connecté au réseau d'un état énergétique d'au moins un premier desdits équipements ;
ledit procédé étant caractérisé en ce que ledit module de traitement de données est en outre configuré pour :
- obtenir au moins un paramètre contextuel relatif à l'un des autres équipements du réseau ;
- Déterminer un usage prochain dudit premier équipement en fonction dudit au moins un paramètre obtenu, par interrogation d'une base de données relatives à des usages habituels desdits équipements stockée sur un module de stockage de données connecté au réseau ;
- Modifier l'état énergétique dudit premier équipement en fonction du résultat de la détermination d'usage prochain.

Par une gestion intelligente des habitudes de l'utilisateur, ce procédé permet donc de réduire efficacement la consommation énergétique d'un foyer, et tout en maintenant, voire améliorant la QoE, alors que les procédés connus la dégradaient.

Selon d'autres caractéristiques avantageuses et non limitatives :
- ladite base de données relatives à des usages desdits équipements comprend:
   - une pluralité de services pouvant être mis en oeuvre, chaque service étant associé à un usage d'un ou plusieurs desdits équipements ;
   - au moins une règle de transition depuis un des desdits services vers un autre.

Ces structure « orientée services » permet de détecter facilement les séquences d'utilisation d'équipements qui permettent dans un grand nombre de cas de repérer les usages habituels de l'utilisateur.
- ladite base de données comprend, pour chaque service et pour chaque équipement associé au service, au moins une règle de modification de l'état énergétique dudit équipement pour le service (cette structure permet ainsi de gérer une pluralité de comportements alternatifs et d'avoir une gestion énergétique optimale en termes de QoE pour chacun d'entre eux) ;
- chaque règle de transition de service et chaque règle de modification de l'état énergétique d'un équipement étant associée à au moins une indication de condition, chaque indication de condition portant soit sur ledit au moins un paramètre contextuel, soit sur une transition de service (des tests booléens sur des conditions sont très faciles à mettre en oeuvre) ;
- la détermination d'un usage prochain pour un équipement comprend la vérification des indications de condition associées à chacune des règles associées à l'équipement pour le service actuel mis en oeuvre, et la vérification des indications de condition associées à chacune des règles de transition de service depuis le service actuel mis en oeuvre ;
- chaque indication de condition d'une règle est associée à un coefficient représentatif d'une probabilité d'occurrence de la condition (l'utilisation de coefficients probabilistes renforce le réalisme du modèle et facilite l'apprentissage des habitudes des utilisateurs) ;
- le module de traitement de données est en outre configuré pour, suite à une modification de l'état énergétique d'au moins un équipement du réseau (provoquée par l'utilisateur, mettre à jour ladite base de données relatives à des usages desdits équipements (ce mode « non-supervisé » permet au système de s'améliorer automatiquement en permanence) ;
- une mise à jour de la base de données relatives à des usages desdits équipements comprend l'ajout d'une règle ou la modification du coefficient associé à une condition d'une règle ;
- ledit paramètre contextuel est un paramètre temporel (ce paramètre donne de très bon résultat car un grand nombre de comportements se répètent quotidiennement à heure fixe) ;
- ledit paramètre contextuel relatif à un équipement est un paramètre d'état indicatif de l'activité de l'équipement (ce paramètre permet d'identifier facilement les combinaisons d'utilisation d'équipements dans un service) ;
- ledit paramètre est relatif à au moins un service en cours d'exécution sur l'équipement (la connaissance d'un service en cours permet d'identifier les équipements sur le point de subir une modification d'état énergétique) ;
- l'état énergétique d'un équipement est fonction d'une combinaison des états énergétiques des différents modules composant l'équipement ;
- une passerelle domestique du réseau comprend le module de traitement de données et le module de stockage de données (la « box » est par définition le coeur d'un réseau de communication local. C'est le meilleur équipement pour la gestion de l'état énergétique des autres équipements).

Selon un deuxième aspect, l'invention concerne un système comprenant une pluralité d'équipements connectés au sein d'un réseau de communication local et un module de traitement de données connecté au réseau configuré pour la modification de l'état énergétique d'au moins un premier desdits équipements ;
le système étant caractérisé en ce qu'il comprend en outre un module de stockage de données connecté au réseau sur lequel est stockée une base de données relatives à des usages habituels desdits équipements, et en ce que le module de traitement de données est en outre configuré pour :
- obtenir au moins un paramètre contextuel relatif à l'un des autres équipements du réseau ;
- déterminer un usage prochain dudit premier équipement en fonction dudit au moins un paramètre obtenu, par interrogation de la base de données relatives à des usages habituels desdits ;
- modifier l'état énergétique dudit premier équipement en fonction du résultat de la détermination d'usage prochain.

Le procédé selon le premier aspect de l'invention est en effet optimal à l'échelle locale, c'est-à-dire à l'échelle du foyer ou de l'entreprise.

Selon d'autres caractéristiques avantageuses et non limitatives, le système comprend une passerelle comprenant le module de traitement de données et le module de stockage de données, pour les mêmes raisons que mentionné précédemment.

Selon un troisième aspect, l'invention concerne cette passerelle du système selon le deuxième aspect.

Selon un quatrième et un cinquième aspect, l'invention concerne respectivement un produit programme d'ordinateur comprenant des instructions de code pour l'exécution d'un procédé de contrôle de la consommation énergétique d'une pluralité d'équipements connectés au sein d'un réseau de communication local selon le premier aspect de l'invention ; et un moyen de stockage lisible par un équipement informatique sur lequel un produit programme d'ordinateur comprend des instructions de code pour l'exécution d'un procédé de contrôle de la consommation énergétique d'une pluralité d'équipements connectés au sein d'un réseau de communication local selon le premier aspect de l'invention.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
- la figure 1 représente un exemple d'architecture pour la mise en oeuvre du procédé selon l'invention ;
- la figure 2 est un graphe comparant la mise en oeuvre d'un procédé selon l'art antérieur et un procédé selon l'invention dans un scénario donné ;
- la figure 3 est un diagramme schématisant la mise en oeuvre d'un mode de réalisation préféré du procédé selon l'invention.

### DESCRIPTION DETAILLEE

### Principe

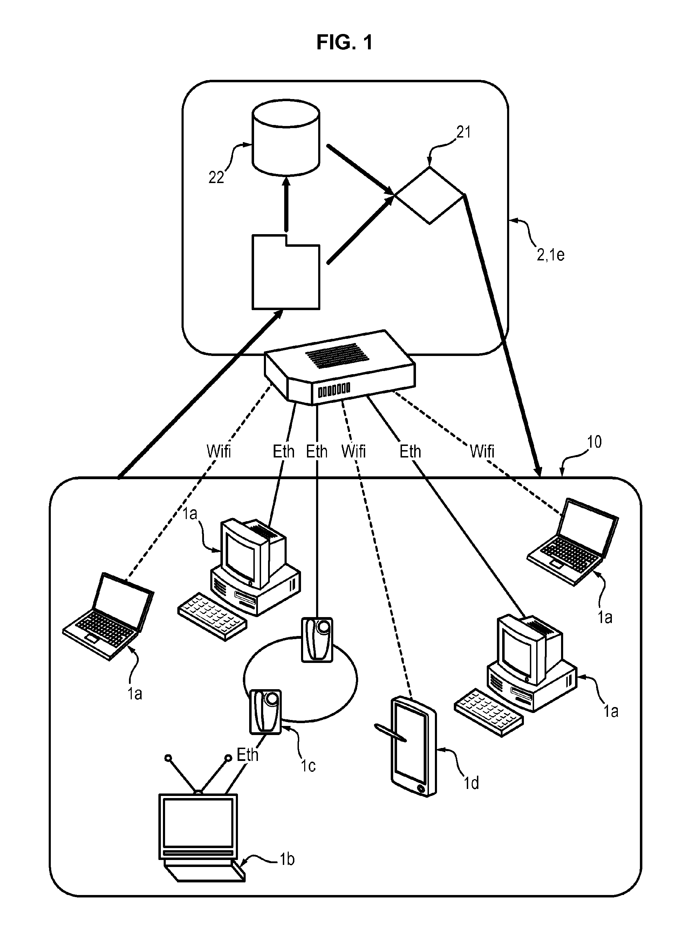

En référence à la figure 1, l'invention propose un procédé de contrôle de la consommation énergétique d'une pluralité d'équipements 1a, 1b, 1c, 1d, 1e connectés au sein d'un réseau de communication local 10.

Par réseau de communication local 10, on entend un réseau de type LAN (« Local Access Network »). Ce réseau 10 peut être en particulier un réseau domestique ou un réseau d'entreprise, et est le plus souvent centré sur une passerelle 2, qui est en particulier un boitier d'accès à Internet (une « box ») du foyer ou de l'entreprise. Dans la suite de la présente description, on se placera dans le cas d'un réseau domestique.

Dans tous les cas, ce réseau 10 peut être aussi bien un réseau filaire (Ethernet), qu'un réseau sans fil (Wi-Fi) ou une combinaison des deux. La liaison peut être directe, ou utiliser un équipement intermédiaire (par exemple des boitiers CPL 1 c) eux-mêmes contrôlables.

Les équipements 1a-e peuvent être n'importe quel équipement (en particulier domestique) disposant d'une connexion réseau (aussi bien filaire que sans-fil). Sur la figure 1 sont représentés des ordinateurs 1a, une Set-Top Box 1b (boitier multimédia) et une tablette tactile 1d, mais on comprendra que des consoles, des smartphones, de l'électroménager, etc. peuvent être des équipements du réseau 10 dont la consommation peut être contrôlée par le présent procédé. Par ailleurs, la passerelle 2 est dans l'exemple de la figure 1 elle-même l'un des équipements (référence 1e) contrôlables.

De façon connue, le procédé propose la modification par un module de traitement de données 21 connecté au réseau 10 d'un état énergétique d'au moins un premier desdits équipements 1a, 1b, 1c, 1d, 1e. Le module de traitement de données peut être le processeur d'un équipement dédié (le « coordinateur énergétique » mentionné précédemment), ou ceux d'un des équipements 1a-e du réseau 10, en particulier ceux de la passerelle 2. Cet équipement est en effet celui qui contrôle le réseau 10, et a donc naturellement une position de coordinateur. De plus, il est bien moins souvent éteint que les autres (car il assure souvent la connectivité à Internet 24h/24), et peut donc mettre en oeuvre de façon optimale le procédé selon l'invention.

Par état énergétique d'un équipement, on entend naturellement un niveau d'alimentation de l'équipement (complètement allumé, complètement éteint, en veille légère, en veille profonde, etc.), mais également une combinaison des états énergétiques des différents modules composant l'équipement 1a, 1b, 1c, 1d, 1e. En effet, il est possible de modifier la consommation énergétique d'un équipement en dégradant (voire désactivant complètement) certaines fonctionnalités. Par exemple, si un équipement 1a, 1b, 1c, 1d, 1e est un routeur Wi-Fi, un de ses états énergétique peut être « allumé mais avec le module Wi-Fi éteint ». Il n'autorise alors plus que des communications filaires. On comprendra ainsi que le présent procédé n'est limité à aucune liste spécifique d'états énergétiques d'équipements, et que l'homme du métier saura l'adapter à ces derniers.

Outre le module de traitement 21, un module de stockage de données 22 tel qu'une mémoire flash est également connecté au réseau 10, et est lui aussi avantageusement celui de la passerelle 2.

Ce procédé se distingue des procédés connus en ce qu'il propose d'anticiper les usages de l'utilisateur, et donc de gérer les états énergétiques de façon intelligente, au lieu d'effectuer les extinctions d'équipement au bout d'un temps arbitrairement prédéterminé d'inactivité.

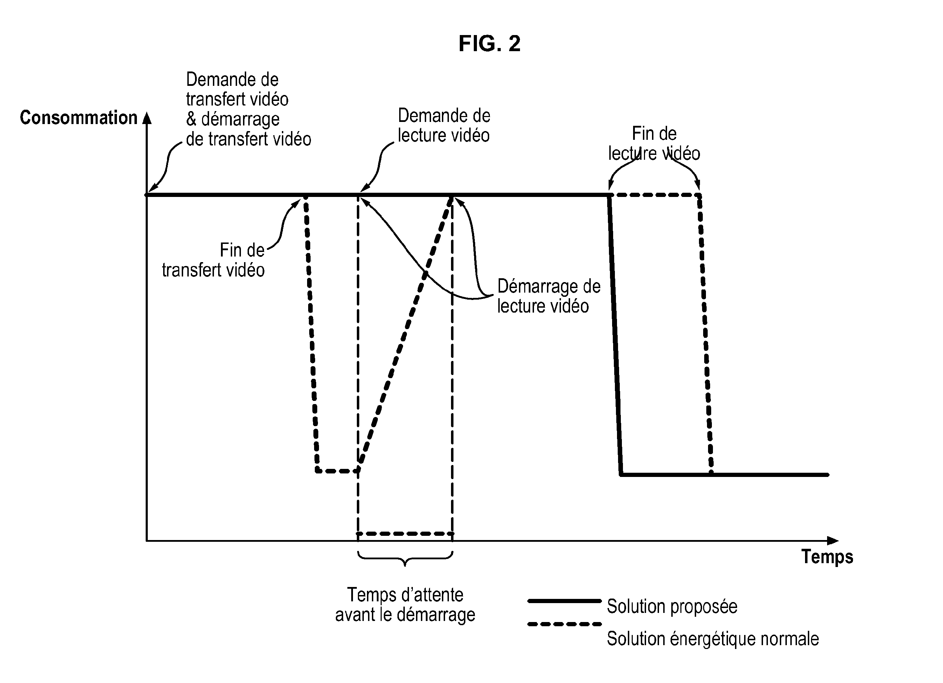

A titre d'exemple illustrant les avantages d'une telle gestion « intelligente » des états énergétiques, la figure 2 décrit un scénario dans lequel l'utilisateur effectue d'abord un transfert depuis un périphérique (par exemple une Set-Top Box) d'un contenu vidéo vers un ordinateur personnel puis, quelques minutes après la fin du transfert, regarde ce contenu vidéo sur le même ordinateur.

Dans le procédé selon l'art antérieur, le coordinateur se contente d'éteindre l'ordinateur peu après la fin du transfert (détection de l'inactivité). Lorsque l'utilisateur souhaite regarder son contenu, il se voit obligé de relancer son ordinateur tout juste éteint, d'où une perte de temps et une gêne sensible.

Le procédé selon l'invention tient compte du fait que l'utilisateur regarde habituellement un contenu vidéo après l'avoir transféré. Ainsi, le coordinateur laisse l'ordinateur allumé, ce qui permet à l'utilisateur de lancer le visionnage directement, sans aucune perte de confort. A la fin de la lecture vidéo (qui arrive plus tôt que dans le procédé connu, puisque l'utilisateur n'a pas perdu de temps à attendre un redémarrage), l'ordinateur est cette fois éteint (puisqu'il n'y a pas lieu d'attendre un usage supplémentaire), pour au final une consommation légèrement moindre tout en fournissant une QoE maximale à l'utilisateur.

On note qu'un tel procédé ne permet pas seulement d'éteindre les équipements au bon moment, mais également de les allumer au bon moment. Cela permet d'améliorer encore davantage la QoE de l'utilisateur puisque l'on va rajouter des automatismes sur les équipements par rapport à un fonctionnement manuel.

Pour mettre en oeuvre cette gestion énergétique intelligente, le module de traitement de données 21 est en outre configuré pour :
- obtenir au moins un paramètre contextuel relatif à l'un des autres équipements 1 a, 1 b, 1 c, 1 d, 1 e du réseau 10 ;
- Déterminer un usage prochain dudit premier équipement 1a, 1b, 1c, 1d, 1e en fonction dudit au moins un paramètre obtenu, par interrogation d'une base de données relatives à des usages habituels desdits équipements 1a, 1b, 1c, 1d, 1e stockée sur un module de stockage de données 22 connecté au réseau 10 ;
- Modifier l'état énergétique dudit premier équipement 1a, 1b, 1c, 1d, 1e en fonction du résultat de la détermination d'usage prochain.

### Paramètres

Pour prendre la décision de changer l'état énergétique d'un équipement 1a-e, le module de traitement 21 doit disposer, outre de l'état actuel de cet équipement, d'au moins un autre paramètre. Ce paramètre est un paramètre contextuel relatif à l'un des autres équipements du réseau 10. Ce paramètre n'est donc pas un paramètre du « premier » équipement, en d'autres l'équipement pour lequel un changement d'état énergétique est envisagé.

Cet autre paramètre est soit relatif à une données contextuelle pure fournie par ledit autre équipement (typiquement un paramètre temporel tel que l'heure, un paramètre physico-chimique telle qu'une température, une information sur un service en cours d'exécution sur l'équipement, etc.) soit indicatif de l'activité dudit autre équipement, en d'autres termes représentatif de l'état énergétique de cet équipement.

Ce paramètre va permettre d'identifier un usage de l'utilisateur. Par exemple, si l'on constate que l'utilisateur regarde tous les soirs la télévision à 20h pour le journal (en l'allumant vers 19h55), le paramètre contextuel est l'heure « 19h55 », fournie notamment par la passerelle 2. Si à ce moment, la télévision présente l'état « éteint », le module de traitement 21 modifie cet état en l'allumant via le réseau 10.

Un paramètre de type indicatif de l'état d'un autre équipement est utile dans le cas d'un usage de type « séquence d'utilisation » (tel que dans le cas de la figure 2). On introduira plus loin la notion de « service ».

L'obtention de paramètres est assurée par un module collecteur représenté sur la figure 1.

### Base de données

Le procédé comprend interrogation d'une base de données relatives aux usages habituels des équipements 1a, 1b, 1c, 1d, 1e stockée sur le module de stockage de données 22 connecté au réseau 10.

L'homme du métier saura composer cette base de données de nombreuses façon, mais de façon particulièrement préférée, elle prend la forme d'un fichier XML (« eXtensible Markup Language »), dont un exemple est :

```
 <?xml version="1.0" encoding="ISO-8859-1" ?>
 <database_info>
     <service_elementary type="download_files">
           <device>
                 <name>laptop</name>
                 <power_min>3.5</power_min>
                 <power_max>40</power_max>
                 <shutdown_condition id="0">
                       <stop_time>24h</stop_time>
                       <decision_weight>0.1</decision_weight>
                 </shutdown_condition>
                 <shutdown_condition id="1">
                       <following_service>view_files</following_service>
                       <decision_weight>0.9</decision_weight>
                 </shutdown_condition>
                 <shutdown_condition id="2">
                       <user_action>shutdown</user_action>
                       <decision_weight>0.3</decision_weight>
                 </shutdown_condition>
                 <turn_on_condition id="0">
                       <start_time>18h</start_time>
                       <decision_weight>0.1</decision_weight>
                 </turn_on_condition>
           </device>
           <device>
                 <name>livebox</name>
                 <power_min>2.6</power_min>
                 <power_max>19.2</power_max>
                 <shutdown_condition id="0">
                       <stop_time>24h</stop_time>
                       <decision_weight>0.3</decision_weight>
                 </shutdown_condition>
                 <shutdown_condition id="1">
                       <user_action>shutdown</user_action>
                       <decision_weight>0.9</decision_weight>
                 </shutdown_condition>
                 <turn_on_condition id="0">
                       <start_time>7h</start_time>
                       <decision_weight>0.6</decision_weight>
                 </turn_on_condition>
                 <turn_on_condition id="1">
                       <following_service>view_files</following_service>
                       <decision_weight>0.9</decision_weight>
                 </turn_on_condition>
           </device>
     </service_elementary>
     <following_elementary_sevice_condition>
           <actual_elementary_sevice>download_files</actual_elementary_sevice>
           <following_elementary_sevice>view_files</following_elementary_sevice>
           <condition id="0">
                 <files_type>multimedia</files_type>
                 <decision_weight>0.9</decision_weight>
           </condition>
           <condition id="1">
                 <time_range>17h-24h</time_range>
                 <decision_weight>0.7</decision_weight>
           </condition>
     </following_elementary_sevice_condition>
     <service_elementary type="view_files">
           <device>
                 <name>stp</name>
                 <power_min>3</power_min>
                 <power_max>21.5</power_max>
                 <shutdown_condition id="0">
                       <stop_time>24h</stop_time>
                       <decision_weight>0.1</decision_weight>
                 </shutdown_condition>
                 <shutdown_condition id="1">
                       <following_service>view_files</following_service>
                       <decision_weight>0.9</decision_weight>
                 </shutdown_condition>
                 <shutdown_condition id="2">
                       <user_action>shutdown</user_action>
                       <decision_weight>0.9</decision_weight>
                 </shutdown_condition>
                 <turn_on_condition id="0">
                       <start_time>18h</start_time>
                       <decision_weight>0.1</decision_weight>
                 </turn_on_condition>
                 <turn_on_condition id="1">
                       <following_service>download_files</following_service>
                       <decision_weight>0.9</decision_weight>
                 </turn_on_condition>
                 <turn_on_condition id="2">
                       <service>watchTV</service>
                       <decision_weight>0.9</decision_weight>
                 </turn_on_condition>
           </device>
     </service_elementary>
     </database_info>
```

Comme l'on voit dans cet exemple, la base de données relatives à des usages desdits équipements 1a, 1b, 1c, 1d, 1e comprend avantageusement :
- une pluralité de services pouvant être mis en oeuvre, chaque service étant associé à un usage d'un ou plusieurs desdits équipements 1a, 1b, 1c, 1d, 1e ;
- au moins une règle de transition depuis un des desdits services vers un autre.

Par service, on entend une utilisation (plus ou moins complexe) d'un ou plusieurs équipements de façon à satisfaire une demande de l'utilisateur. Dans ce modèle préféré de la base de données, la notion de service se rapproche de celle d'« état » d'une machine à états. Il est toutefois à noter que d'une part plusieurs services peuvent être simultanément en cours, et que d'autre part il est possible qu'aucun service ne soit en cours

Dans l'exemple, deux services sont décrits : le service consistant à transférer un contenu sur le PC de l'utilisateur (« download_files »), et le service consistant à lire le contenu (« view_file»).

Est également décrite une règle de transition du premier de ces services à l'autre (« following_elementary_service_condition »). Cette transition correspond à l'habitude, mentionnée précédemment, de consulter un contenu après l'avoir récupéré.

Un service est décrit via les équipements (« devices ») impliqués, par exemple le PC receveur (« laptop ») et un boitier d'accès à internet émetteur(« livebox ») pour le premier service.

La base de données comprend en outre, pour chaque service et pour chaque équipement 1a, 1b, 1c, 1d, 1e associé au service, au moins une règle de modification de l'état énergétique dudit équipement 1a, 1b, 1c, 1d, 1e pour le service. Ces règles (« turn_on_condition », « shutdown_condition », correspondant respectivement à une règle de passage à l'état allumé, et une règle de passage à l'état complètement éteint) sont dans l'exemple numérotées selon un indice « id ».

Qu'elles soient des règles de transition de service ou des règles de modification de l'état énergétique d'un équipement 1a, 1b, 1c, 1d, 1e, elles peuvent être associées à au moins une indication de condition, chaque indication de condition portant soit sur ledit au moins un paramètre contextuel (par exemple <time_range>17h-24h</time_range>), soit sur une transition de service (par exemple <following_service>view_files</following_service>).

Chaque indication de condition d'une règle peut également être associée à un coefficient représentatif d'une probabilité d'occurrence de la condition (par exemple <decision_weight>0.9</decision_weight>).

Grâce à cette base, la détermination d'un usage prochain pour un équipement 1a, 1b, 1c, 1d, 1e comprend simplement la vérification des indications de condition associées à chacune des règles associées à l'équipement 1 a, 1b, 1 c, 1d, 1 e pour le service actuel mis en oeuvre, et la vérification des indications de condition associées à chacune des règles de transition de service depuis le service actuel mis en oeuvre.

Si dans un service donné les paramètres obtenus coïncident avec les conditions associées à une règle, le module de traitement 21 applique la règle et met en oeuvre la modification d'état énergétique associée à la règle pour l'équipement 1 a, 1 b, 1 c, 1 d, 1 e dont la règle dépend.

### Mode supervisé

Les données de la base de données concernent comme expliqué précédemment les habitudes de l'utilisateur. Ces données peuvent être prédéterminées à l'aide d'études comportementales et être fournies en l'état, mais de façon particulièrement préférée, alternativement ou en complément des données prédéterminées, les habitudes particulières au foyer du réseau local 10 peuvent être déterminées par apprentissage tout au long de la vie du réseau 10 et des utilisations des équipements 1a, 1b, 1c, 1d, 1e.

Pour cela le module de traitement 21 est en outre configuré pour, suite à une modification de l'état énergétique d'au moins un équipement 1a, 1 b, 1 c, 1 d, 1 e du réseau 10 provoquée par l'utilisateur, mettre à jour ladite base de données relatives à des usages desdits équipements 1a, 1b, 1c, 1d, 1e.

Une mise à jour de la base de données relatives à des usages desdits équipements 1a, 1b, 1c, 1d, 1e comprend notamment l'ajout d'une règle ou la modification du coefficient associé à une condition d'une règle, et cela en fonction des paramètres obtenus par le module collecteur lors de la modification d'état étudiée.

L'objectif est qu'à chaque mise à jour la base de données décrive de façon plus réaliste les habitudes des utilisateurs du foyer, pour une QoE croissante.

### Chronogramme

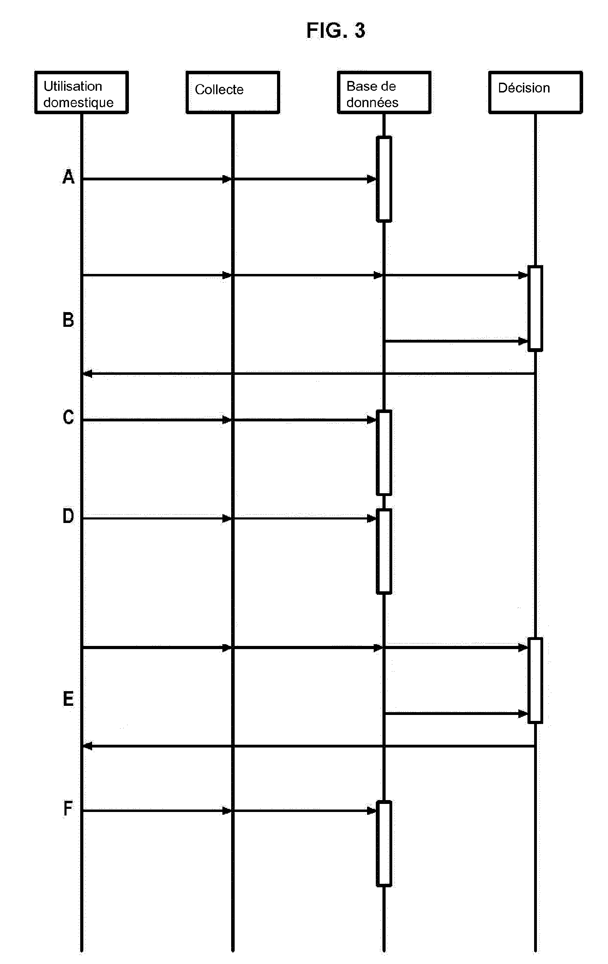

La figure 3 illustre à nouveau les différents cas que rencontre le module de traitement de données 21 dans l'exécution du procédé selon l'invention :
A. détection du démarrage d'un premier service ;
B. détection d'une transition de service, et modification associée d'un état énergétique d'un équipement impliqué ;
C. mise à jour de la base de données suite à la détection d'un usage inhabituel par l'utilisateur ;
D. détection du démarrage d'un nouveau service ;
E. détection d'une nouvelle transition de service, et modification associée d'un état énergétique d'un équipement impliqué ;
F. mise à jour de la base de données suite à la détection d'un nouvel usage inhabituel par l'utilisateur ;

- etc.

### Terminal mobile

Selon un deuxième aspect, l'invention concerne le système comprenant une pluralité d'équipements 1a, 1b, 1c, 1d, 1e connectés au sein d'un réseau de communication local 10, pour lequel est mis en oeuvre le procédé selon l'invention.

Ainsi ce système comprend le module de traitement de données 21 connectés au réseau 10 configuré pour la modification de l'état énergétique d'au moins un premier desdits équipements 1 a, 1b, 1 c, 1d, 1e, et le module de stockage de données 22 connecté au réseau 10 sur lequel est stockée la base de données relatives à des usages habituels desdits équipements 1a, 1b, 1c, 1d, 1e.

Ces deux modules 21, 22 sont avantageusement ceux d'une passerelle 2 du réseau 10. Selon un quatrième et un cinquième aspects, l'invention concerne cette passerelle 2.

Le module de traitement de données 21 est donc en outre configuré pour :
- obtenir au moins un paramètre contextuel relatif à l'un des autres équipements 1 a, 1 b, 1 c, 1 d, 1 e du réseau 10 ;
- Déterminer un usage prochain dudit premier équipement 1a, 1b, 1c, 1d, 1e en fonction dudit au moins un paramètre obtenu, par interrogation de la base de données relatives à des usages habituels desdits équipements 1 a, 1b, 1 c, 1d, 1e ;
- modifier l'état énergétique dudit premier équipement 1 a, 1 b, 1 c, 1 d, 1e en fonction du résultat de la détermination d'usage prochain

### Produit programme d'ordinateur

Selon un quatrième et un cinquième aspects, l'invention concerne un produit programme d'ordinateur comprenant des instructions de code pour l'exécution (sur un module de traitement de donnés 21, en particulier celui de la passerelle 2) d'un procédé de contrôle de la consommation énergétique d'une pluralité d'équipements 1a, 1b, 1c, 1d, 1e connectés au sein d'un réseau de communication local 10 selon le premier aspect de l'invention, ainsi qu'une unité de stockage lisible par un équipement informatique (par exemple le module de stockage de données 22) sur lequel on trouve ce produit programme d'ordinateur

## Revendications

1. Procédé de contrôle de la consommation énergétique d'une pluralité d'équipements (1a, 1b, 1c, 1d, 1e) connectés au sein d'un réseau de communication local (10), le procédé comprenant la modification par un module de traitement de données (21) connecté au réseau (10) d'un état énergétique d'au moins un premier desdits équipements (1a, 1b, 1c, 1d, 1e) ;
ledit procédé étant **caractérisé en ce que** ledit module de traitement de données (21) est en outre configuré pour :
- obtenir au moins un paramètre contextuel relatif à l'un des autres équipements (1a, 1b, 1c, 1d, 1e) du réseau (10) ;
- Déterminer un usage prochain dudit premier équipement (1a, 1 b, 1 c, 1d, 1e) en fonction dudit au moins un paramètre obtenu, par interrogation d'une base de données relatives à des usages habituels desdits équipements (1a, 1b, 1c, 1d, 1e) stockée sur un module de stockage de données (22) connecté au réseau (10) ;
- Modifier l'état énergétique dudit premier équipement (1 a, 1 b, 1 c, 1 d, 1e) en fonction du résultat de la détermination d'usage prochain.

2. Procédé selon la revendication 1, dans lequel ladite base de données relatives à des usages desdits équipements (1a, 1b, 1c, 1 d, 1e) comprend:
- une pluralité de services pouvant être mis en oeuvre, chaque service étant associé à un usage d'un ou plusieurs desdits équipements (1a, 1b, 1c, 1d, 1e);
- au moins une règle de transition depuis un des desdits services vers un autre.

3. Procédé selon la revendication 2, dans lequel ladite base de données comprend, pour chaque service et pour chaque équipement (1 a, 1 b, 1 c, 1d, 1 e) associé au service, au moins une règle de modification de l'état énergétique dudit équipement (1 a, 1 b, 1 c, 1 d, 1 e) pour le service.

4. Procédé selon la revendication 3, dans lequel chaque règle de transition de service et chaque règle de modification de l'état énergétique d'un équipement (1 a, 1 b, 1 c, 1 d, 1 e) étant associée à au moins une indication de condition, chaque indication de condition portant soit sur ledit au moins un paramètre contextuel, soit sur une transition de service.

5. Procédé selon la revendication 4, dans lequel la détermination d'un usage prochain pour un équipement (1a, 1b, 1c, 1d, 1e) comprend la vérification des indications de condition associées à chacune des règles associées à l'équipement (1a, 1b, 1c, 1d, 1e) pour le service actuel mis en oeuvre, et la vérification des indications de condition associées à chacune des règles de transition de service depuis le service actuel mis en oeuvre.

6. Procédé selon l'une des revendications 4 et 5, dans lequel chaque indication de condition d'une règle est associée à un coefficient représentatif d'une probabilité d'occurrence de la condition.

7. Procédé selon l'une des revendications précédentes, dans lequel le module de traitement de données (21) est en outre configuré pour, suite à une modification de l'état énergétique d'au moins un équipement (1a, 1b, 1c, 1d, 1e) du réseau (10) provoquée par l'utilisateur, mettre à jour ladite base de données relatives à des usages desdits équipements (1 a, 1 b, 1 c, 1 d, 1 e).

8. Procédé selon les revendications 6 et 7 en combinaison, dans lequel une mise à jour de la base de données relatives à des usages desdits équipements (1 a, 1 b, 1 c, 1 d, 1 e) comprend l'ajout d'une règle ou la modification du coefficient associé à une condition d'une règle.

9. Procédé selon l'une des revendications précédentes, dans lequel ledit paramètre contextuel est un paramètre temporel.

10. Procédé selon la revendication 1, dans lequel ledit paramètre contextuel relatif à un équipement (1a, 1b, 1c, 1d, 1e) est un paramètre d'état indicatif de l'activité de l'équipement (1 a, 1 b, 1 c, 1 d, 1 e).

11. Procédé selon l'une des revendications précédentes, dans lequel ledit paramètre est relatif à au moins un service en cours d'exécution sur l'équipement (1 a, 1b, 1 c, 1 d, 1 e).

12. Procédé selon l'une des revendications précédente, dans lequel l'état énergétique d'un équipement (1a, 1b, 1c, 1d, 1e) est fonction d'une combinaison des états énergétiques des différents modules composant l'équipement (1 a, 1b, 1 c, 1d, 1 e).

13. Procédé selon l'une des revendications précédentes, dans lequel une passerelle (2) du réseau (10) comprend le module de traitement de données (21) et le module de stockage de données (22).

14. Système comprenant une pluralité d'équipements (1a, 1b, 1c, 1d, 1e) connectés au sein d'un réseau de communication local (10) et un module de traitement de données (21) connecté au réseau (10) configuré pour la modification de l'état énergétique d'au moins un premier desdits équipements (1 a, 1b, 1 c, 1 d, 1e) ;
le système étant **caractérisé en ce qu'**il comprend en outre un module de stockage de données (22) connecté au réseau (10) sur lequel est stockée une base de données relatives à des usages habituels desdits équipements (1 a, 1 b, 1 c, 1 d, 1 e), et **en ce que** le module de traitement de données (21) est en outre configuré pour :
- obtenir au moins un paramètre contextuel relatif à l'un des autres équipements (1 a, 1 b, 1 c, 1d, 1 e) du réseau (10) ;
- déterminer un usage prochain dudit premier équipement (1a, 1 b, 1 c, 1d, 1e) en fonction dudit au moins un paramètre obtenu, par interrogation de la base de données relatives à des usages habituels desdits équipements (1 a, 1b, 1 c, 1 d, 1e) ;
- modifier l'état énergétique dudit premier équipement (1 a, 1 b, 1 c, 1 d, 1e) en fonction du résultat de la détermination d'usage prochain.

15. Système selon la revendication 14, comprenant en outre une passerelle (2) comprenant le module de traitement de données (21) et le module de stockage de données (22).

16. Passerelle (2) d'un système selon la revendication 15.

17. Produit programme d'ordinateur comprenant des instructions de code pour l'exécution d'un procédé de contrôle de la consommation énergétique d'une pluralité d'équipements (1a, 1b, 1c, 1d, 1e) connectés au sein d'un réseau de communication local (10) selon l'une des revendications 1 à 13.
